# EUROPÄISCHE PATENTSCHRIFT

(11) **EP 0 349 799 B1**
(45) Veröffentlichungstag und Bekanntmachung des Hinweises auf die Patenterteilung: **09.06.1993**
(21) Anmeldenummer: 89110661.9
(22) Anmeldetag: 13.06.1989
(51) Int. Cl.: B29C 45/18

(54) **Kunststoff-Spritzgiesseinheit**
Plastic material injection-moulding unit
Dispositif d'injection de matière plastique

(30) Priorität: 07.07.1988 DE 3822926
(43) Veröffentlichungstag der Anmeldung: 10.01.1990
(73) Patentinhaber: Hehl, Karl, 72290 Lossburg (DE)
(72) Erfinder: Hehl, Karl, 72290 Lossburg (DE)
(74) Vertreter: Mayer, Friedrich E.

(56) Entgegenhaltungen:
- FR-A- 2 531 000
- PATENT ABSTRACTS OF JAPAN, Band 8, Nr. 112 (M-298)[1549], 25. Mai 1984; & JP-A-59 22 711 (SUMITOMO JUKIKAI KOGYO K.K.) 06-02-1984

## Beschreibung

Die Erfindung betrifft eine Kunststoff-Spritzgießeinheit entsprechend dem Oberbegriff des Anspruches 1.

Bei den bekannten Spritzgießeinheiten dieser Art (DE 29 20 584 C2 - Fig. 4; DE 30 46 387 C2 - Sp. 2, Zn. 21-29 und Sp. 4, Zn. 20-30; DE 32 28 161) ist die Führungsschiene für die Versorgungseinheit derart quer zur oder neben der vertikalen Symmetrieebene der Spritzgießeinheit angeordnet, daß die Entleerungsbohrung außerhalb der vertikalen Projektionsfläche der Spritzgießeinheit liegt und somit für die Aufnahme des abrieselnden Kunststoff-Granulats ohne ohne weiteres zugänglich ist. Dieser Vorteil ist jedoch durch eine erhebliche Asymmetrie der Spritzgießeinheit oder ein starkes seitliches Ausladen der Versorgungseinheit bzw. Entleerungsvorrichtung erkauft. Dabei ist jede der in den genannten Druckschriften beschriebenen baulichen Konzeptionen einer Spritzgießeinheit notwendigerweise mit einer anderen räumlichen Anordnung der Führungsleiste im Verhältnis zur Symmetrieebene verknüpft.

In Übereinstimmung mit den gattungsgemäßen Spritzgießeinheiten ist es bei der Versorgungseinheit einer bekannten Strangpresse (DE-GM 71 48 839) möglich, die Auslauföffnung einer oder mehrerer Materialbehälter zur Deckung mit einer Entleerungsöffnung zu bringen, die sich im Abstand von der Symmetrieebene der Strangpresse befindet.

Ausgehend von dem erörterten Stand der Technik liegt der Erfindung die Aufgabe zugrunde, eine Spritzgießeinheit der eingangs genannten Gattung derart weiterzubilden, daß eine rationelle Serienfertigung bei vereinfachter Lagerhaltung möglich ist, indem sie wahlweise mit unterschiedlichen Versorgungseinheiten betrieben werden kann, deren Schwerpunkt in Entleerungsposition in der vertikalen Symmetrieebene der Spritzgießeinheit liegt oder doch dieser wesentlich angenähert ist, und deren Überführung in Entleerungsposition auch bei sehr unterschiedlicher Gestaltung bzw. Anordnung von Versorgungsblock, Antriebszylindern und Einspritzzylindern annäherungsweise in der Symmetrieebene erfolgen kann. Diese Aufgabe wird erfindungsgemäß durch die Merkmale des Patentanspruches 1 gelöst.

Die Lehre des Patentanspruches läßt sich bei Spritzgießeinheiten unterschiedlicher Bauart mit sehr unterschiedlichen Versorgungseinheiten verwirklichen. Sie ist besonders vorteilhaft bei stark seitlich ausladenden Versorgungsblöcken und hat zudem den wesentlichen Vorteil, daß nach dem Baukastenprinzip ein Granulatbehälter (vergl. DE 30 46 387 C2, Fig. 2) oder ein Granulatwechsler (vergl. DE 36 05 219 A1) auf der Führungsschiene in der Symmetrieebene führbar sind, soweit sie mit den gleichen Anschlußorganen versehen sind.

Von besonderer Bedeutung ist die erfindungsgemäße Lösung bei Spritzgießeinheiten entsprechend der deutschen Patentanmeldung P 37 22 228, bei welchen diese aus einer zentralen Einspritzposition für eine zentrale Angußöffnung achsparallel in eine nicht zentrale Einspritzposition für eine nicht zentrale Angußöffnung verschoben werden kann.Denn bei diesen Spritzgießeinheiten wird verhindert, daß zu der durch die achsparallele Verschiebung der Spritzgießeinheit in eine nicht zentrale Position bedingten Asymmetrie eine zusätzliche weitere Asymmetrie durch das Verschieben der Verschiebeplatte des Granulatwechslers zu einer am freien Ende der Führungsschiene angeordneten Entleerungsöffnung kommt.

Bei einer Ausbildung des Versorgungsblockes entsprechend den Patentansprüchen 3 bis 6, kann die Führungsschiene extrem kurz gehalten werden, was bei Spritzgießeinheiten mit einer Einrichtung zum automatischen Wechseln des Plastifizierzylinders bei dessen Freisetzung und Abtransport von Bedeutung ist.

Nachstehend wird die Erfindung anhand der Zeichnungen erläutert.

Es zeigen:
- Fig. 1,2: die mit unterschiedlichen Versorgungseinheiten ausgerüstete Spritzgießeinheit in Seitenansicht,
- Fig. 3: die Spritzgießeinheit im Schnitt nach Linie III-III von Fig. 1 in vergrößerter Darstellung,
- Fig. 4: die Spritzgießeinheit im Schnitt nach Linie IV-IV von Fig. 2 in vergrößerter Darstellung,

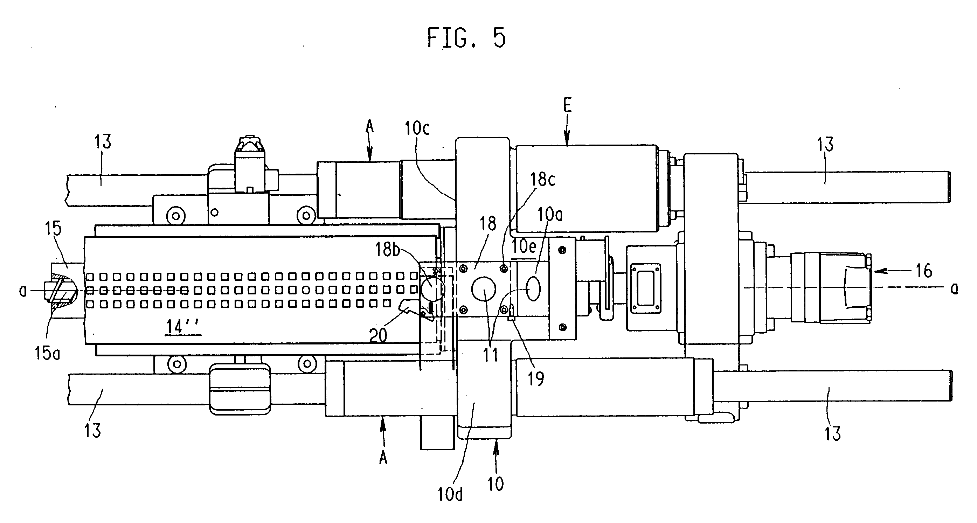

- Fig. 5: die Spritzgießeinheit bei abgenommener Versorgungseinheit in Draufsicht,
- Fig. 6: die Führungsschiene mit angeschlossener Versorgungseinheit bei einem Schnitt nach Linie VI-VI von Fig. 1,
- Fign. 7 und 8: die Anordnung gemäß Fig. 6 bei anderen Positionen der Versorgungseinheit,
- Fig. 9: den Versorgungsblock mit seinen Antriebs- und Einspritzzylindern in perspektivischer Darstellung,
- Fig. 10: einen Schnitt nach Linie X-X von Fig. 4,
- Fig. 11: einen vergrößerten, teilgeschnittenen Ausschnitt von Fig. 3 und
- Fig. 12: einen vergrößerten, teilgeschnittenen Ausschnitt von Fig. 4.

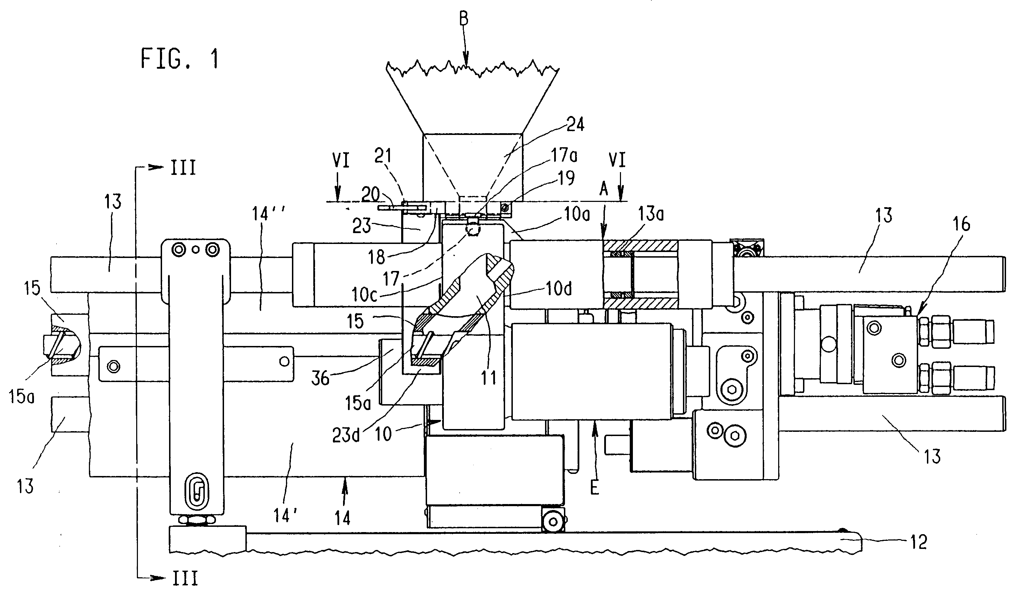

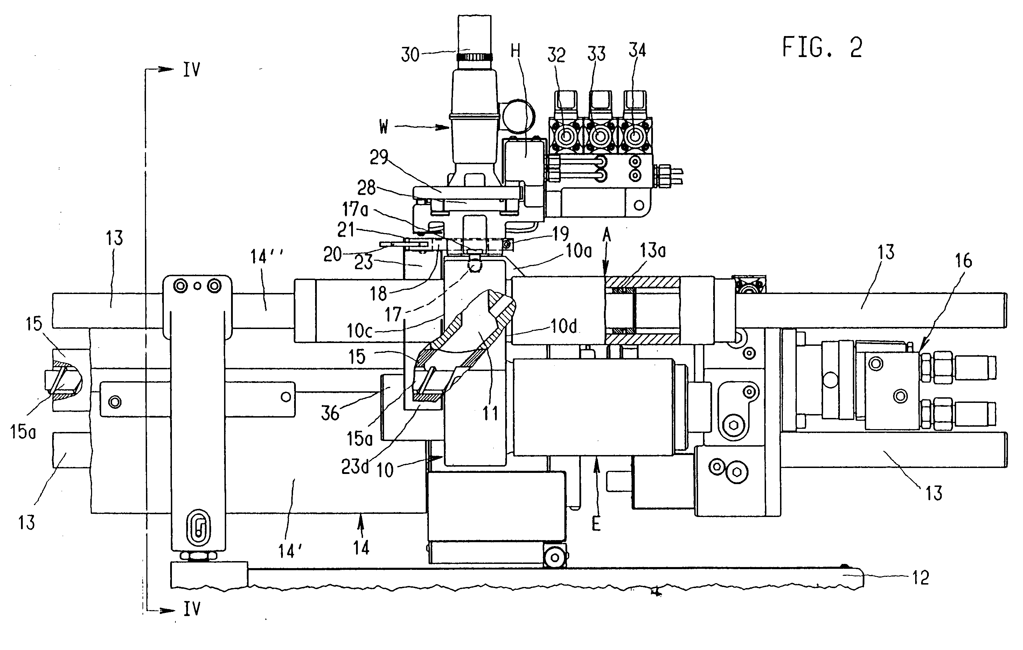

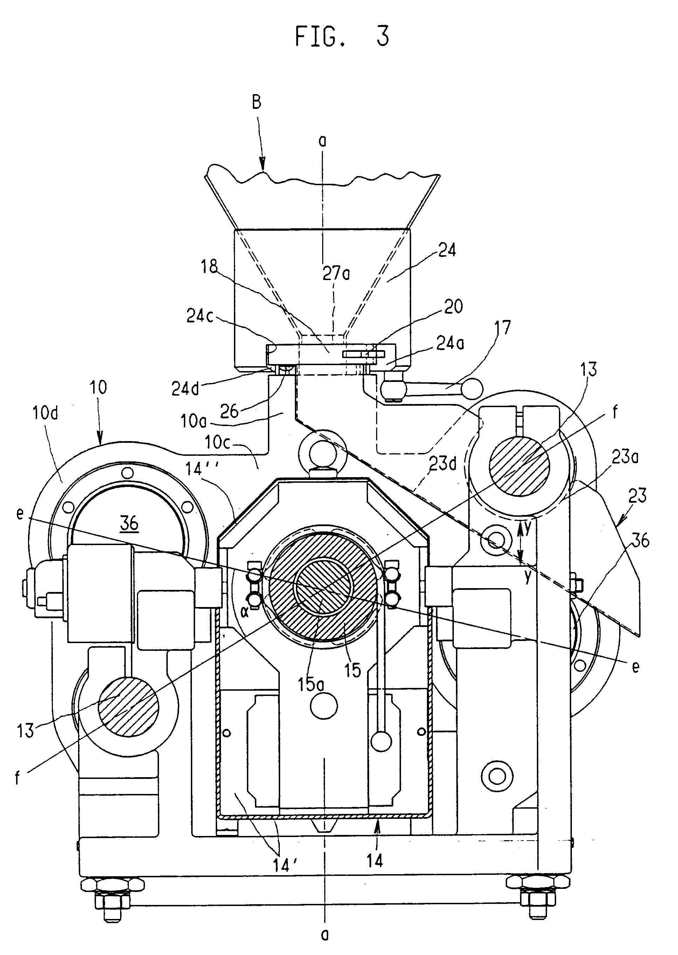

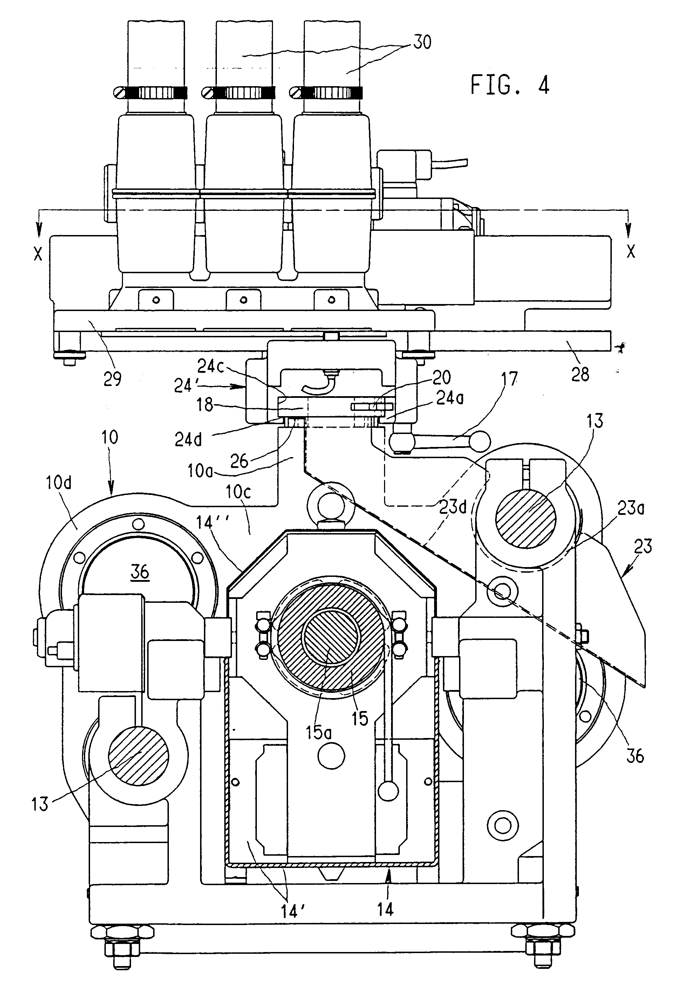

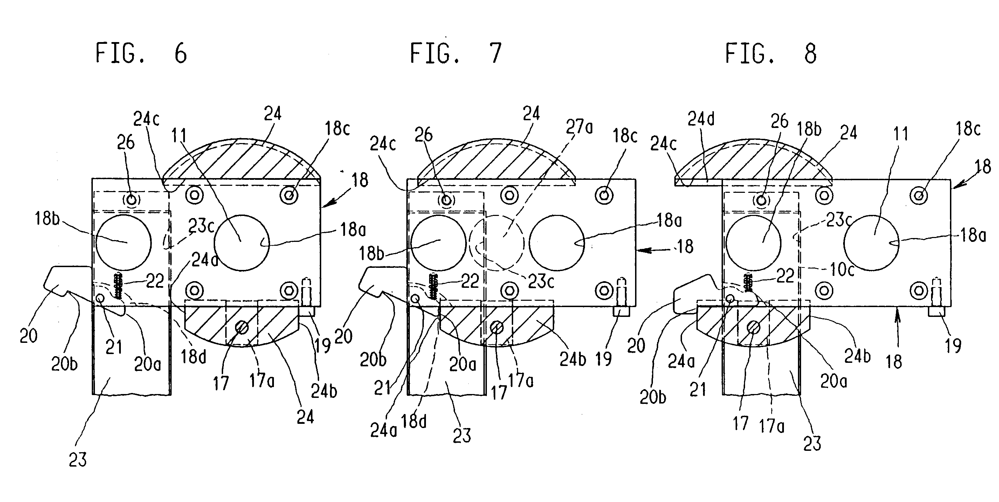

Die auf einem Tisch 12 abgestützte Kunststoff-Spritzgießeinheit ist mittels wenigstens einer Antriebseinrichtung A in Richtung der Angußöffnung einer Spritzgießform bewegbar. Der Plastifizierzylinder 15 ist dabei mit seinem rückwärtigen Ende in einer zentralen Bohrung eines Versorgungsblockes 10 aufgenommen. Die Kolben 13a der als Zylinder ausgebildeten Antriebseinrichtung A sind im Versorgungsblock 10 festgelegt. Auf dem Versorgungsblock 10 können als Versorgungseinheit B,W zur Zuführung des Kunststoffgranulats wahlweise verschiedene Zufuhreinrichtungen befestigt werden. Im zeichnerisch dargestellten Ausführungsbeispiel handelt es sich dabei zum einen um einen Granulatbehälter B (Figur 1,3), zum anderen um einen Granulatwechsler W (Figur 2,4). Alle Versorgungseinheiten B,W können über die gleichen Anschlußorgane am Versorgungsblock 10 befestigt werden. Dabei nimmt ein Trägerelement, das als Grundkörper 24 oder Tragkörper 24′ ausgebildet ist, die Versorgungseinheit B,W auf. Die Versorgungseinheit B,W ist auf einer Führungsschiene 18 verschiebbar angeordnet, die an einer Anschlußfläche des Versorgungsblockes 10 befestigt ist. Auf der Führungsschiene 18 kann die Versorgungseinheit B,W in verschiedenen Stellungen festgelegt werden. In Versorgungsposition (Figur 6) gelangt das Kunststoffmaterial aus der Auslauföffnung 27a der Versorgungseinheit B,W über eine Versorgungsbohrung 18a der Führungsschiene 18 in den Fallschacht 11 des Versorgungsblockes 10 und in den Plastifizierzylinder 15. In Entleerungsposition (Figur 8) decken sich Auslauföffnung 27a und eine Entleerungsbohrung 18b. Desweiteren befindet sich an der Spritzgießeinheit eine als Einspritzzylinder E ausgebildete Einspritzeinrichtung zur axialen Verschiebung der im Plastifizierzylinder 15 über einen Rotationsmotor 16 rotierbar angeordneten Plastifizierschnecke 15a. Der Plastifizierzylinder 15 ist durch ein aus zwei Gehäusehälften 14′,14˝ bestehendes Schutzgehäuse 14 abgedeckt.

Die Führungsschiene 18 ist längs der und symmetrisch zur vertikalen Symmetrieebene a-a der Spritzgießeinheit angeordnet. Dabei überragt sie eine vertikale Stirnfläche 10c der Anschlußfläche des Versorgungsblockes 10 stirnseitig. Die Entleerungsbohrung 18b befindet sich in diesem überragenden Abschnitt annäherungsweise symmetrisch zu dieser Symmetrieebene a-a. Quer zur Symmetrieebene a-a verläuft ein für ein Rutschgefälle ausreichend geneigter Entleerkanal 23, der am Versorgungsblock 10 mit einer vertikalen Flanke 23c anliegt. Sein Eingang befindet sich unter der Entleerungsbohrung 18b.

Der von zwei Antriebszylinder A und zwei Einspritzzylindern E durchsetzte Versorgungsblock 10 ist zur Bewegung an den Kolbenstangen 13 der Antriebszylinder A geführt, die symmetrisch zur Achse des Plastifizierzylinders 15 liegen. Der Entleerkanal 23 ist zwischen einem Antriebszylinder A und einem Einspritzzylinder E hindurchgeführt. Dabei liegen kreisförmige Stanzkanten 23a der Flanken 23b,23c des Entleerkanals an der Mantelfläche des Antriebszylinders A an.

Die Anschlagfläche 24b des Trägerelements 24,24′ der Versorgungseinheit B,W liegt in der einen Endposition in Versorgungsposition (Figur 6) an einem abnehmbaren Anschlagelement 19 der Führungsschiene 18 an. In der anderen Endposition in Entleerungsposition (Figur 8) sowie in einer mittleren Position in einer Sperrposition (Fig.7) liegt das Trägelement 24,24′ je an einer Rastnase 20b bzw. 20a eines in der Führungsschiene begrenzt um einen Schwenkbolzen 21 schwenkbaren Rasthebels 20 an. In diesen Stellungen ist das Trägerelement 24,24′ mittels eines Spannstückes 17a durch eine geringe Schwenkbewegung einer Spanneinrichtung 17 arretierbar. Um von der Sperrposition unter Anliegen der Anschlagfläche 24a des Trägerelementes 24,24′ an der Rastnase 20a des Rasthebels in die Entleerposition zu gelangen, muß der Rasthebel gegen die Kraft einer Feder 22 bewegt werden. Anschließend kann die Versorgungseinheit B,W bis zum Anschlag an der Rastnase 20b des Rasthebels 20 bewegt werden. Dadurch ist sichergestellt, daß kein unbeabsichtigtes Entleeren der Versorgungseinheit B,W stattfindet. Bei Verlassen der Entleerungsposition (Figur 8) geht der Rasthebel 20 infolge der Federkraft wieder in seine Ausgangsposition zurück. Um dem Rasthebel diese Bewegungsmöglichkeit zu geben, weist die Führungsschiene 18 eine Ausnehmung 18d auf. Ist das Trägerelement durch den Tragkörper 24′ eines Granulatwechslers W gebildet, so befindet sich auf dem Tragkörper 24′ senkrecht zur Symmetrieebene a-a eine Laufschiene 28. Auf dieser Laufschiene 28 ist über hydraulische Antriebszylinder H angetriebene Verschiebeplatte 29 befestigt. Die teils beweglichen, teils stationären Antriebszylinder H werden über Schaltventile 33,34 gesteuert. Ein weiteres Schaltventil 32 steuert über Endschalter dabei einen Sperrschieber zur Abdeckung der Zuführöffnungen. An der Verschiebeplatte 28 sind mehrere Zuführschläuche für unterschiedliche Kunststoffmaterialien angeschlossen (Figur 2). Die Zufuhrschläuche 30 des Granulatwechslers werden im Gefolge senkrecht zueinander stehender Verschiebung mit der Entleerungsbohrung 18b zur Deckung gebracht.

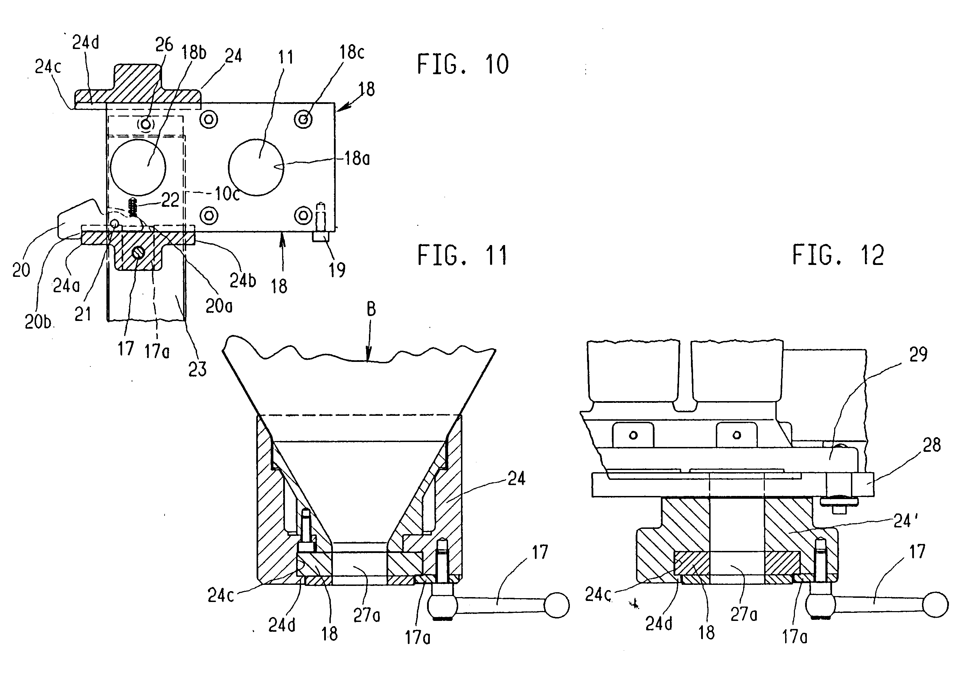

Durch Abnahme bzw. Anbringen des Anschlagelementes 19 an der Führungsschiene 18 können wahlweise der Grundkörper 24 des Granulatbehälters B oder der Tragkörper 24′ des Granulatwechslers W auf die Führungsschiene 18 aufgeschoben oder abgezogen werden. Beide Trägerelemente 24,24′ weisen dabei Anschlagflächen 24a,24b auf, die mit den Rastnasen 20a,20b oder mit dem Anschlagelement 19 in Verbindung stehen. Über Führungen 24c und durch Umgriff 24d sind die Trägerelemente 24,24′ am Versorgungsblock 10 befestigt. Wie durch Vergleich von Figur 8 und Figur 10 ersichtlich, unterscheiden sich die Trägerelemente 24,24′ zwar in ihrer geometrischen Form, besitzen jedoch die gleichen Anschlagflächen 24a,24b, die gleiche Führung 24c und den gleichen Umgriff 24d.

Der Abstand y-y zwischen den aus der Stirnfläche 10c des Versorgungsblockes 10 hervorragenden Einspritzkolbens 36 und den benachbarten Antriebszylindern A entspricht etwa der lichten Weite der Entleerungsbohrung 18b. Antriebszylinder A und Einspritzzylinder E liegen symmetrisch zu Ebenen f-f bzw. e-e, die einen Winkel α von etwa 45° zueinander einschließen (Figur 3).

Die Rutschfläche 23d des Entleerkanals 23 befindet sich in einem Abstand vom benachbarten Einspritzkolben 36, der dessen freie axiale Bewegung gerade noch zuläßt. Der Entleerkanal 23 ist durch eine Schraube 26 mit der Führungsschiene 18 verbunden.
Die Anschlußfläche wird durch die horizontale Oberfläche einer im Grundriß rechteckigen Ausformung 10a eines quaderförmigen, zentralen Teils 10e des Versorgungsblockes 10 gebildet, der seitliche, die Antriebszylinder A und die Einspritzzylinder E aufnehmende Flügelbereiche 10d geringer axialer Tiefe t-t aufweist (Figur 12).

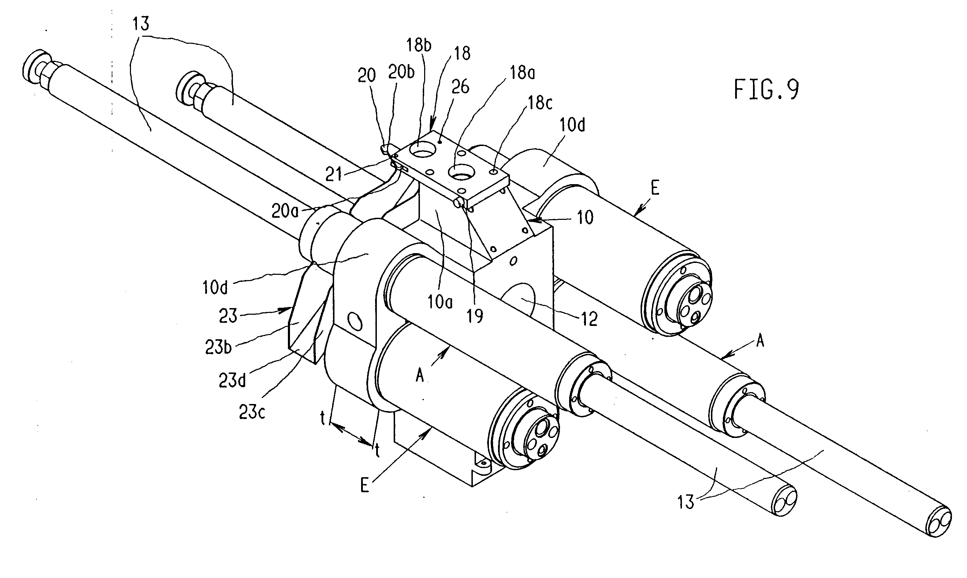

Figur 9 zeigt den Versorgungsblock 10 mit angebrachter Führungsschiene 18, ohne daß eine Versorgungseinheit B,W aufgesetzt ist. Deutlich sind das Anschlagelement 19, der Rasthebel 20 mit seinen beiden Rastnasen 20a,20b, sowie die Versorgungsbohrung 18a und die Entleerungsbohrung 18b in der Führungsschiene 18 zu erkennen. Die Führungsschiene 18 ist mit Schrauben 18c am Versorgungsblock 10 befestigt.

## Patentansprüche

1. Kunststoff-Spritzgießeinheit, die mittels wenigstens einer Antriebseinrichtung (Antriebszylinder A) in Richtung der Angußöffnung einer Spritzgießform bewegbar ist, mit einem Plastifizierzylinder (15) mit wenigstens einer auf einem Versorgungsblock (10) des Plastifizierzylinders (15) angeordneten Versorgungseinheit, die auf einer Führungsschiene (18) des Versorgungsblockes (10) aus ihrer Versorgungsposition, in welcher das Kunststoffmaterial aus der Auslauföffnung (27a) der Versorgungseinheit über eine Versorgungsbohrung (18a) der Führungsschiene (18) und einen Fallschacht (11) des Versorgungsblockes (10) in den Plastifizierzylinder (15) gelangt, in eine Entleerungsposition verschiebbar ist, in welcher sich die Auslauföffnung (27a) mit einer Entleerungsbohrung (18b) der Führungsschiene deckt, und mit wenigstens einer Antriebseinrichtung (Einspritzzylinder E) zur axialen Verschiebung der Plastifizierschnecke (15a) des Plastifizierzylinders (15), dadurch gekennzeichnet, daß die Führungsschiene (18) längs und die Entleerungsbohrung (18b) annäherungsweise symmetrisch zur vertikalen Symmetrieebene (a-a) der Spritzgießeinheit angeordnet sind, wobei ein das Kunststoffmaterial aus der Entleerungsbohrung (18b) aufnehmender Entleerkanal (23) im Abstand von dieser Symmetrieebene (a-a) mündet und daß auf die Führungsschiene (18) als Versorgungseinheit wahlweise ein Granulatbehälter (B) mit Grundkörper (24) oder ein Granulatwechsler (W) mit Tragkörper (24′) aufschiebbar ist, der eine senkrecht zur Symmetrieebene (a-a) stehende Laufschiene (28) und eine auf dieser Laufschiene verfahrbare Verschiebeplatte (29) mit mehreren Zuführschläuchen (30) für unterschiedliche Kunststoffmaterialien umfaßt.

2. Spritzgießeinheit nach Patentanspruch 1, dadurch gekennzeichnet, daß ein für ein Rutschgefälle ausreichend geneigter Entleerkanal (23) quer zur Symmetrieebene (a-a) am Versorgungsblock (10) angeordnet ist, dessen Eingang sich unter der Entleerbohrung (18b) befindet.

3. Spritzgießeinheit nach Patentanspruch 1 oder 2, dadurch gekennzeichnet, daß der von zwei Antriebszylindern (A) und zwei Einspritzzylindern (E) durchsetzte Versorgungsblock (10) an den Kolbenstangen (13) der Antriebszylinder geführt ist, wobei Antriebszylinder (A) und Einspritzzylinder (E) symmetrisch zu Ebenen (f-f; e-e in Fig. 3) liegen, die einen Winkel (α) von etwa 45° zueinander einschließen,
und daß der Entleerkanal (23) zwischen einem Antriebszylinder (A) und dem Einspritzzylinder (E) hindurchgeführt ist.

4. Spritzgießeinheit nach einem der vorhergehenden Patentanspruche, dadurch gekennzeichnet, daß der Granulatbehälter (B) bzw. der Granulatwechsler (W) in der einen Endposition (Versorgungsposition) an einem abnehmbaren Anschlagelement (19) der Führungsschiene (18) und in der anderen Endposition (Entleerungsposition) sowie in einer mittleren Position (Sperrposition) je an einer Rastnase (20b bzw. 20a) eines in der Führungsschiene (18) begrenzt schwenkbaren Rasthebels (20) anliegt und mittels einer Spanneinrichtung (17) arretierbar ist.

5. Spritzgießeinheit nach einen der Ansprüche 1 bis 4, dadurch gekennzeichnet, daß die Rutschfläche (23d) des Entleerkanals (23) sich in einem Abstand vom benachbarten Einspritzkolben (36) befindet, der dessen freie Axialbewegung gerade noch zuläßt.

6. Spritzgießeinheit nach einem der vorhergehenden Ansprüche, dadurch gekennzeichnet, daß die Anschlußfläche durch die horizontale Oberfläche einer im Grundriß rechteckigen Ausformung (10a) eines quaderförmigen, zentralen Teils (10e) des Versorgungsblockes (10) gebildet ist, der seitliche, die Antriebszylinder (A) und die Einspritzzylinder (E) aufnehmende Flügelbereiche (10d) geringerer axialer Tiefe (t-t in Fig. 9) aufweist.

7. Spritzgießeinheit nach einem der vorhergehenden Ansprüche, dadurch gekennzeichnet, daß die Zufuhrschläuche (30) des Granulatwechslers (W) im Gefolge senkrecht zueinander stehender Verschiebungen mit der Entleerungsbohrung (18b) zur Deckung bringbar sind.

## Claims

1. Injection-moulding unit being movable by drive means (drive cylinder A) in direction of an inlet of an injection mould, comprising a plasticizing cylinder (15) arranged at a feeding block (10) carrying at least one feeding unit mounted on a track rail (18) of the feeding unit and displacable thereon into a feeding position, whereby plastic material is dischargeable from an outlet opening (27a) of the feeding unit through a feeding bore (18a) of the track rail (18) and a feeding shaft (11) of the feeding block (10) into the platicizing cylinder (15) and into an emptying position in which the outlet opening (27a) is in alignment with an emptying bore (18b) of the track rail (18), further comprising at least one means (injection cylinder) for an axial displacement of the feed screw (15a) in the plasticizing cylinder (15), chracterized in that the track rail (18) extends along a vertical longitudinal plane of symmetry (a-a), wherein the emptying bore (18b) is situated at least approximately symmetrically with the plane of symmetry (a-a) whereby an emptying duct (23) is discharged the plastic material from the emptying bore and is ending at a distance from the plane of symmetry (a-a) and that alternatively a hopper (B) with a base body (24) or a granule changer (W) with carrier is plaseable on the track rail (18) as feeding unit, whereby the carries (24) comprises a slide plate (29) slidable on the silde rail (28) with a plurality of feeding tubes for different plastic materials.

2. Injection-moulding unit according to patent claim 1, characterized in that the emptying duct (23) constitutes a chute extending transversely to the plane of symmetry (a-a) and an inlet of the emptying duct (23) is beyound the emptying bore (18b).

3. Injection-moulding unit according to patent claims 1 or 2, characterized in that the feeding block (10) protruded by two drive cylinders (A) and two injection cylinders (E) is guided on rods (13) of the drive cylinders whereby the drive cylinders (A) and the injection cylinders (E) are symmetrically arranged to planes (f-f, e-e in Fig. 3) which are arranged at an angle (α) of about 45° to one another and that the emptying duct (23) extends between one drive cylinder (A) an one injection cylinder (E).

4. Injection-moulding unit according to one of the above patent claims, characterized in that the hopper (B) respectively the granule changer (W) touches a detachably mounted stop member (19) of the track rail (18) in one end position (feeding position) and in the other end position (emptying position) as well as in a middle position (shut-off position) one of at least two detent noses (20b resp. 20a) of a detent lever (20) mounted in the track rail (18) for a limited pivotal movement and they are lockable by clamping means (17).

5. Injection-moulding unit according to one of the above patent claims, characterized in that an inclined bottom (23d) of the emptying duct (23) is arranged at a close distance from the injection cylinder enabling an axially movement of the injection cylinder.

6. Injection-moulding unit according to one of the above claims, characterized in that a coupling surface is formed by a horizontal surface of a rectangular projection (10a) of a parallelepipedic central portion (10e) of the feeding block (10) comprising laterally arronged wing portions (10d) having a smaller axial extent (t-t in Fig.9) whereby drive cylinder (A) and injection cylinder (E) are arranged in the wing portions.

7. Injection-moulding unit according to one of the above claims, characterized in that the feeding tubes (30) of the granule changer (W) are brought in alignment with the emptying bore (18) by several movements being perpendicular one to another.

## Revendications

1. Unité de moulage par injection pour matières plastiques pouvant être déplacée vers l'entrée d'un moule pour injection à l'aide d'au moins un dispositif de commande (cylindre de commande A), comportant un cylindre plastifiant (15) muni d'au moins une unité d'alimentation disposée sur un bloc d'alimentation (10) du cylindre plastifiant (15) et pouvant être déplacée sur un rail de guidage (18) du bloc d'alimentation (10) de sa position d'alimentation, dans laquelle la matière plastique sort par l'orifice d'évacuation (27a) de l'unité d'alimentation et s'écoule dans le cylindre plastifiant (15) par le biais d'un perçage d'alimentation (18a) du rail de guidage (18) et d'un tube de descente (11) du bloc d'alimentation (10), dans une position d'évacuation, dans laquelle l'orifice d'évacuation (27a) coïncide avec un perçage d'évacuation (18b) du rail de guidage, et comportant également au moins un dispositif de commande (cylindre d'injection E) pour déplacer la vis plastifiante (15a) du cylindre plastifiant (15) de manière axiale, caractérisée en ce que le rail de guidage (18) est disposé longitudinalement par rapport au plan de symétrie vertical (a-a) de l'unité de moulage par injection et le perçage d'évacuation (18b), approximativement symétriquement par rapport à ce dernier, le canal d'évacuation (23) qui recueille la matière plastique s'écoulant par le perçage d'évacuation (18b) débouchant à l'écart de ce plan de symétrie (a-a), et en ce qu'un réservoir de granulat (B) avec un corps de base (24) ou un changeur de granulat (W) avec un corps porteur (24'), au choix, peut être monté sur le rail de guidage (18) en tant qu'unité d'alimentation, chacun d'entre eux comportant une glissière (28) perpendiculaire au plan de symétrie (a-a) et une plaque de déplacement (29) avec plusieurs tuyaux d'alimentation (30) pour différentes matières plastiques, pouvant être déplacée sur cette glissière.

2. Unité de moulage par injection selon la revendication 1, caractérisée en ce qu'un canal d'évacuation (23) suffisamment incliné pour former une pente de glissement est disposé sur le bloc d'alimentation (10) obliquement au plan de symétrie (a-a), canal dont l'entrée se situe en dessous du perçage d'évacuation (18b).

3. Unité de moulage par injection selon la revendication 1 ou 2, caractérisée en ce que le bloc d'alimentation (10) traversé par deux cylindres de commande (A) et deux cylindres d'injection (E) est relié aux bielles (13) des cylindres de commande, les cylindres de commande (A) et les cylindres d'injection (E) étant disposés symétriquement par rapport à des plans (f-f; e-e sur la Fig. 3) qui forment entre eux un angle (α) d'environ 45°, et en ce que le canal d'évacuation (23) passe entre un cylindre de commande (A) et le cylindre d'injection (E).

4. Unité de moulage par injection selon l'une des revendications précédentes, caractérisée en ce que le réservoir de granulat (B) ou le changeur de granulat (W) touche, dans l'une des positions extrêmes (position d'alimentation), un élément d'arrêt (19) amovible du rail de guidage (18) et touche, dans l'autre position extrême (position d'évacuation) et dans une position médiane (position de blocage), chaque fois un taquet d'arrêt (20b ou 20a) d'un levier à crans (20) pouvant pivoter de manière limitée dans le rail de guidage (18), et peut être bloqué au moyen d'un dispositif de serrage (17).

5. Unité de moulage par injection selon l'une des revendications 1 à 4, caractérisée en ce que la surface de glissement (23d) du canal d'évacuation (23) se situe à une certaine distance du piston d'injection (36) adjacent, ce qui lui permet tout juste de se déplacer sur l'axe.

6. Unité de moulage par injection selon l'une des revendications précédentes, caractérisée en ce que la face de raccordement est formée par la surface horizontale d'une saillie (10a) rectangulaire d'une partie centrale (10e) essentiellement en forme de parallélépipède du bloc d'alimentation (10) présentant des ailes (10e) latérales de profondeur axiale (t-t sur la Fig. 9) moindre qui portent les cylindres de commande (A) et les cylindres d'injection (E).

7. Unité de moulage par injection selon l'une des revendications précédentes, caractérisée en ce qu'il est possible de faire coïncider les tuyaux d'alimentation (30) du changeur de granulat (W) avec le perçage d'évacuation (18b) consécutivement à des déplacements dans deux directions perpendiculaires.
